# EUROPEAN PATENT SPECIFICATION

(11) **EP 4 175 815 B1**
(45) Date of publication and mention of the grant of the patent: **25.11.2026**
(21) Application number: 21782610.6
(22) Date of filing: 03.05.2021
(51) Int. Cl.: B29C 64/106, B29C 64/118, B29C 64/314, B29C 64/336, B29C 64/35, B29C 64/386, B33Y 10/00, B33Y 30/00, B33Y 50/00, B33Y 70/10

(54) **SYSTEM FOR RAPID OBJECT PRODUCTION USING ADDITIVE INFILL DESIGN**
SYSTEM ZUR SCHNELLEN HERSTELLUNG VON OBJEKTEN DURCH ADDITIVES INFILL-DESIGN
SYSTÈME POUR LA PRODUCTION RAPIDE D'OBJETS UTILISANT LA CONCEPTION ADDITIVE DE REMPLISSAGE

(30) Priority: 02.07.2020 US 202063047638 P
(43) Date of publication of application: 10.05.2023
(73) Proprietor: PPG Industries Ohio Inc., Cleveland, OH 44111 (US)
(72) Inventor: KUTCHKO, Cynthia, Pittsburgh, Pennsylvania 15239 (US); BUBAS, Michael Anthony, Pittsburgh, Pennsylvania 15215 (US); WILKINSON, Bryan William, Pittsburgh, Pennsylvania 15222 (US); DOBOSZ, Kerianne Merceline, Cleveland, OH 44111 (US)
(74) Representative: f & e patent
(86) International application number: PCT/US2021/030441
(87) International publication number: WO 2022/005595

(56) References cited:
- WO-A1-2019/113364
- US-A1- 2017 157 844
- US-A1- 2018 086 002
- US-A1- 2019 152 149
- US-A1- 2019 322 039

## Description

This invention was made with government support under contract no. W911NF-17-2-0227 awarded by the US ARMY (US Army ACC-APG-RTP W911NF). The government has certain rights in the invention.

### BACKGROUND OF THE INVENTION

### 1. Technical Field

The present invention relates to computer control of three-dimensional printing methods that use coreactive materials.

### 2. Background and Relevant Art

Three-dimensional (3D) printing, also referred to as additive manufacturing, has experienced a technological explosion in the last several years. This increased interest is related to the ability of 3D printing to easily manufacture a wide variety of objects from common computer-aided design (CAD) files. In 3D printing, a composition is laid down in successive layers of material to build a structure. These layers may be produced, for example, from liquid, powder, paper, or sheet material.

In some conventional configurations, a 3D printing system utilizes a thermoplastic material. The 3D printing system extrudes the thermoplastic material through a heated nozzle on to a platform. Using instructions derived from a CAD file, the system moves the nozzle with respect to the platform, successively building up layers of thermoplastic material to form a 3D object. After being extruded from the nozzle, the thermoplastic material cools. The resulting 3D object is thus made of layers of thermoplastic material that have been extruded in a heated form and layered on top of each other. WO 2019/113364 A1 discloses the preamble of claims 1 and 7 and relates to a three-dimensional (3D) object production system and methods for 3D printing reactive components to form a thermoset product. US 2017/157844 A1 is directed to printheads and extruders used in three-dimensional object printers and, more particularly, to extrusion printheads that extrude an extrusion material through two or more nozzles. US 2019/322039 A1 relates to a method for the production of a component/workpiece, wherein the component is produced at least in part using an additive method. In particular, such a method can be used in the field of component production for the furniture and structural component industry. US 2018/086002 A1 relates to a 3D printer suitable for printing object having a varying composition and wherein the composition of liquid reactant mixtures may be controlled during 3D printing.

### BRIEF SUMMARY OF THE INVENTION

The present invention includes a computer system for part production using additive infill design. The computer system comprises one or more processors and one or more computer-readable media having stored thereon executable instructions that when executed by the one or more processors configure the computer system to perform various actions. The computer system receives a computer-aided design (CAD) file that describes physical dimensions of a target object. The computer system identifies a physical boundary portion of the target object within the CAD file, wherein the physical boundary portion comprises a portion of the target object that encloses infill material. Additionally, the computer system determines a target flow rate to infill the physical boundary portion with the infill material. Further, the computer system generates a first tool path to flow infill material into the physical boundary portion. Further still, the computer system sends instructions to a computer system in communication with a dispenser that cause the dispenser to implement the first tool path while flowing the infill material into the physical boundary portion. The infill material comprises a mixture of two different materials and a volume mix ration of the mixture of the two different materials is varied over the first tool path.

Additionally, the present invention includes a method for part production using additive infill design. The method comprises receiving, at one or more processors, a computer-aided design (CAD) file that describes physical dimensions of a target object. The method also comprises identifying, with the one or more processors, a physical boundary portion of the target object within the CAD file, wherein the physical boundary portion comprises a portion of the target object that encloses infill material. Additionally, the method comprises determining, with one or more processors, a target flow rate to infill the physical boundary portion with the infill material. Further, the method comprises generating, with one or more processors, a first tool path to flow infill material into the physical boundary portion. Further still, the method comprises sending instructions to a computer system in communication with a dispenser that cause the dispenser to implement the first tool path while flowing the infill material into the physical boundary portion. The physical boundary portion comprises a boundary material that is different than the infill material. The infill material comprises a mixture of two different materials and a volume mix ration of the mixture of the two different materials is varied over the first tool path.

Additional features and advantages of exemplary implementations of the invention will be set forth in the description which follows, and in part will be obvious from the description, or may be learned by the practice of such exemplary implementations. The features and advantages of such implementations may be realized and obtained by means of the instruments and combinations particularly pointed out in the appended claims. These and other features will become more fully apparent from the following description, clauses and appended claims or may be learned by the practice of such exemplary implementations as set forth hereinafter.

### BRIEF DESCRIPTION OF THE DRAWINGS

In order to describe the manner in which the above recited and other advantages and features of the invention can be obtained, a more particular description of the invention briefly described above will be rendered by reference to specific examples thereof, which are illustrated in the appended drawings. Understanding that these drawings depict only typical examples of the invention and are not therefore to be considered to be limiting of its scope, the invention will be described and explained with additional specificity and detail through the use of the accompanying drawings in which:
Figure 1 illustrates a system for rapid object production using additive infill design;
Figure 2 illustrates a schematic of a computer system for rapid object production using additive infill design;
Figure 3A illustrates an example target object for manufacture;
Figure 3B illustrates a physical boundary portion of the example target object for manufacture shown in Figure 3A;
Figure 3C illustrates a tool path within the physical boundary portion of the example target object for manufacture shown in Figure 3B;
Figure 3D illustrates the completed target object shown in Figure 3A;
Figure 4A illustrates a tool path with a variable volume mix ratio within the physical boundary portion of the example target object;
Figure 4B illustrates another tool path with a variable volume mix ratio within the physical boundary portion of the example target object; and
Figure 5 shows a flowchart of steps in a method for rapid object production using additive infill design.

### DETAILED DESCRIPTION OF THE PREFERRED EMBODIMENTS

The present invention extends to systems, methods, and apparatuses for rapid object production using additive infill design. The systems, methods, and apparatuses operate through the deposition of coreactive materials as infill during the creation of a target object. As used here, a "target object" may refer to a portion of a physical object or a complete physical object that is being additively manufactured by the systems, method, and/or apparatuses described here. Additionally, as used herein coreactive materials include thermoset materials.

Additive manufacturing using coreactive components has several advantages compared to alternative additive manufacturing methods. As used herein, "additive manufacturing" refers to the use of computer-aided design (through user generated files or 3D object scanners) to cause an additive manufacturing apparatus to deposit material, layer upon layer, in precise geometric shapes. Additive manufacturing using coreactive components can create stronger parts because the materials forming successive layers can be coreacted to form covalent bonds between the layers. Also, because the components have a low viscosity when mixed higher filler content can be used. The higher filler content can be used to modify the mechanical and/or electrical properties of the materials and the built object. Coreactive components can extend the chemistries used in additively manufactured parts to provide improved properties such as solvent resistance and thermal resistance.

Additionally, the ability to use a computer system to control the use of coreactive components within an additive manufacturing environment provides several advantages. For example, the computer system is able to dynamically control and adjust the flow rates and tool paths of the coreactive components in ways that produce desired physical attributes of the resulting material. Such adjustments and control provide unique advantages within additive manufacturing.

For purposes of the following detailed description, it is to be understood that the invention may assume various alternative variations and step sequences, except where expressly specified to the contrary. Moreover, other than in any operating examples or where otherwise indicated, all numbers expressing, for example, quantities of ingredients used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

The use of the singular includes the plural and plural encompasses singular, unless specifically stated otherwise. In addition, the use of "or" means "and/or" unless specifically stated otherwise, even though "and/or" may be explicitly used in certain instances.

The term "polymer" is meant to include prepolymer, homopolymer, copolymer, and oligomer.

Embodiments of the present disclosure are directed to the production of structural objects using 3D printing. A 3D object may be produced by forming successive portions or layers of an object by depositing at least two coreactive components onto a substrate and thereafter depositing additional portions or layers of the object over the underlying deposited portion or layer. Layers are successively deposited to build the 3D printed object. The coreactive components can be mixed and then deposited or can be deposited separately. When deposited separately, the components can be deposited simultaneously, sequentially, or both simultaneously and sequentially.

Deposition and similar terms refer to the application of a printing material comprising a coreactiveting or coreactive composition and/or its reactive components onto a substrate (for a first portion of the object) or onto previously deposited portions or layers of the object. Each coreactive component may include monomers, prepolymers, adducts, polymers, and/or crosslinking agents, which can chemically react with the constituents of the other coreactive component.

The at least two coreactive components may be mixed together and subsequently deposited as a mixture of coreactive components that react to form portions of the object. For example, the two coreactive components may be mixed together and deposited as a mixture of coreactive components that react to form the coreactiveting composition by delivery of at least two separate streams of the coreactive components into a mixing apparatus such as a static mixer to produce a single stream that is then deposited. The coreactive components may be at least partially reacted by the time a composition comprising the reaction mixture is deposited. The deposited reaction mixture may react at least in part after deposition and may also react with previously deposited portions and/or subsequently deposited portions of the object such as underlying layers or overlying layers of the object.

Alternatively, the two coreactive components may be deposited separately from each other to react upon deposition to form the portions of the object. For example, the two coreactive components may be deposited separately such as by using an inkjet printing system whereby the coreactive components are deposited overlying each other and/or adjacent to each other in sufficient proximity so the two reactive components may react to form the portions of the object. As another example, in an extrusion, rather than being homogeneous, a cross-sectional profile of the extrusion may be inhomogeneous such that different portions of the cross-sectional profile may have one of the two coreactive components and/or may contain a mixture of the two coreactive components in a different molar and/or equivalents ratio.

Furthermore, throughout a 3D-printed object, different parts of the object may be formed using different proportions of the two coreactive components such that different parts of an object may be characterized by different material properties. For example, some parts of an object may be rigid and other parts of an object may be flexible.

It will be appreciated that the viscosity, reaction rate, and other properties of the coreactive components may be adjusted to control the flow of the coreactive components and/or the coreactiveting compositions such that the deposited portions and/or the object achieves and retains a desired structural integrity following deposition. The viscosity of the coreactive components may be adjusted by the inclusion of a solvent, or the coreactive components may be substantially free of a solvent or completely free of a solvent. The viscosity of the coreactive components may be adjusted by the inclusion of a filler, or the coreactive components may be substantially free of a filler or completely free of a filler. The viscosity of the coreactive components may be adjusted by using components having lower or higher molecular weight. For example, a coreactive component may comprise a prepolymer, a monomer, or a combination of a prepolymer and a monomer. The viscosity of the coreactive components may be adjusted by changing the deposition temperature. The coreactive components may have a viscosity and temperature profile that may be adjusted for the particular deposition method used, such as mixing prior to deposition and/or ink jetting. The viscosity may be affected by the composition of the coreactive components themselves and/or may be controlled by the inclusion of rheology modifiers as described herein.

It can be desirable that the viscosity and/or the reaction rate be such that following deposition of the coreactive components the composition retains an intended shape. For example, if the viscosity is too low and/or the reaction rate is too slow a deposited composition may flow in a way the compromises the desired shape of the finished object. Similarly, if the viscosity is too high and/or the reaction rate is too fast, the desired shape may be compromised.

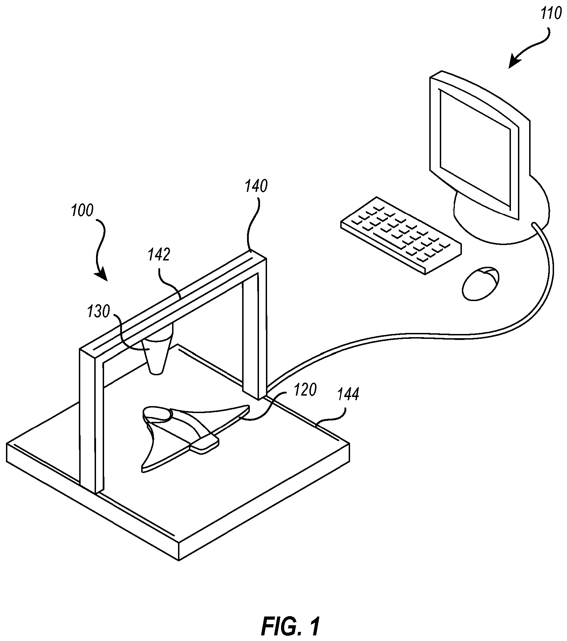

Turning now to the figures, Figure 1 illustrates a system for rapid object production using additive infill design. The depicted system comprises a 3D printer 100 in communication with a computer system 110. While depicted as a physically separate component, the computer system 110 may also be wholly integrated within the 3D printer 100, distributed between multiple different electronic devices (including a cloud computing environment), or otherwise integrated with the 3D printer 100. As used herein, a "3D printer" refers to any device capable of additive manufacture using computer-generated data files. Such computer-generated data files herein are referred to as "CAD files."

The depicted 3D printer 100 is depicted with a target object 120 in the form of a drone body. The drone body comprises a fixed-wing aircraft design that is constructed by the 3D printer 100 using, at least in part, coreactive components. The 3D printer 100 also comprises a dispenser 130 that is attached to a movement mechanism 140. As used herein, a "dispenser" may comprise a dynamic nozzle, a static nozzle, injection device, a pouring device, a dispensing device, an extrusion device, a spraying device, or any other device capable of providing a controlled flow of coreactive components. Additionally, the movement mechanism 140 is depicted as comprising a dispenser attached within a track 142 that is moveable in an X-axis direction along an arm and another set of tracks 144 in which the arm is able to move in a Y-axis direction. One will appreciate, however, that this configuration is provided only for the sake of example and explanation. In additional or alternative configurations, the movement mechanism 140 may comprise any system that is capable of controlling a position of the dispenser 130 with respect to a target object 120, including, but not limited to a system that causes the target object 120 to move with respect to the dispenser 130.

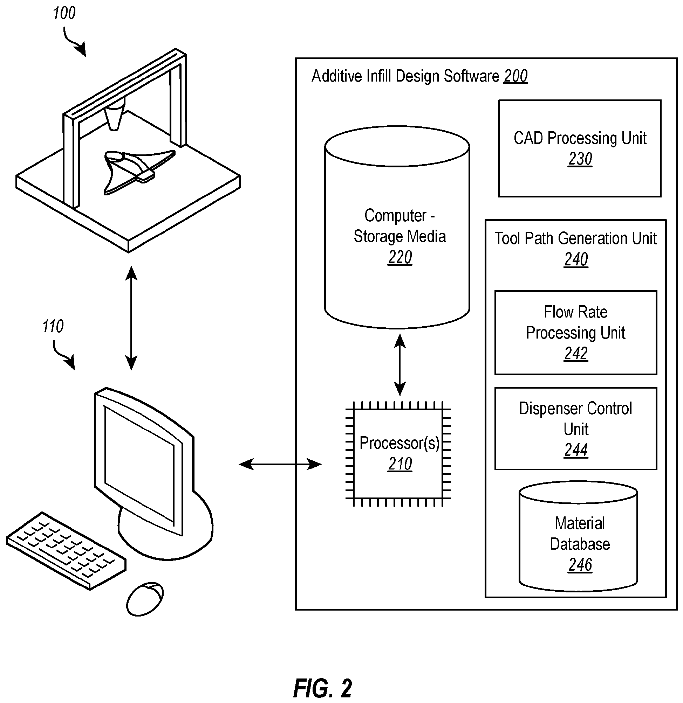

Figure 2 illustrates a schematic of a computer system 110 for rapid object production using flow infill design. The computer system 110 is shown as being in communication with a 3D printer 100. Additionally, various modules, or units, of an additive infill design software 200 are depicted as being executed by the computer system 110. In particular, the additive infill design software 200 is depicted as comprising a CAD processing unit 230, a tool path generation unit 240, a flow rate processing unit 242, a dispenser control unit 244, and a material database 246. As used herein, a "module" comprises computer executable code and/or computer hardware that performs a particular function. One of skill in the art will appreciate that the distinction between different modules is at least in part arbitrary and that modules may be otherwise combined and divided and still remain within the scope of the present disclosure. As such, the description of a component as being a "module" is provided only for the sake of clarity and explanation and should not be interpreted to indicate that any particular structure of computer executable code and/or computer hardware is required, unless expressly stated otherwise. In this description, the terms "unit", "component", "agent", "manager", "service", "engine", "virtual machine" or the like may also similarly be used.

The computer system 110 also comprises one or more processors 210 and one or more computer-storage media 220 having stored thereon executable instructions that when executed by the one or more processors 210 configure the computer system 110 to perform various acts. For example, the computer system 110 is configured to receive a computer-aided design (CAD) file that describes physical dimensions of a target object 120. In the depicted example, the CAD processing unit 230 reads the CAD file and identifies physical dimensions for a drone body. The CAD file may also comprise instructions relating to the type of material and/or desired characteristics of the material that is to be used to create the drone body.

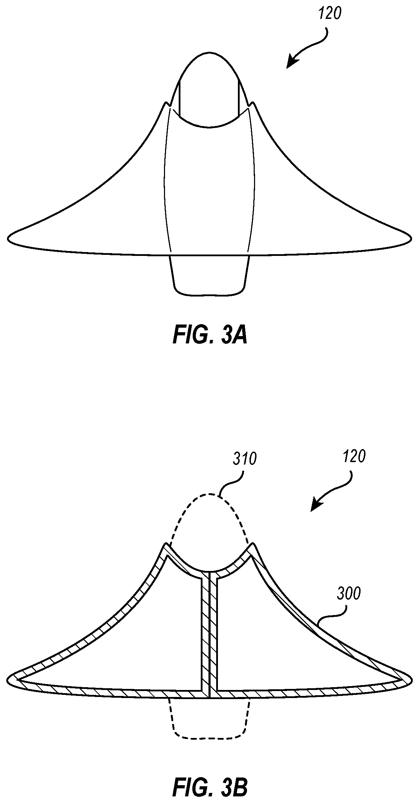

The computer system 110 is also configured to identify a physical boundary portion of the target object 120 within the CAD file. As used herein, the "physical boundary portion" comprises a portion of the target object that encloses infill material. As used herein, "infill material" comprises any material that is placed by the dispenser 130 within a physical boundary portion of the target object. For example, Figure 3A illustrates an example target object for manufacture. Figure 3B illustrates a physical boundary portion 300 of the example target object 120. In the depicted example, the physical boundary portion 300 comprises an internal support structure for the drone body. Dashed lines 310 are shown to depict the final outline of the drone. The dashed lines 310 also indicate that a physical boundary portion 300 may not necessarily comprise the outermost edges of the target object 120. In some case, a target object 120 may comprise multiple physical boundary portions that each define a different area that encloses infill material.

In the depicted example, the physical boundary portion 300, in the form of the support structure, may provide structural support for the resulting drone body so that the drone body can fly. Additionally, the physical boundary portion 300 may comprise a material that is different than the infill material. For example, the physical boundary portion 300 may comprise a thermoplastic material that was created through additive manufacturing. Similarly, the physical boundary portion 300 may comprise a material, such as but not limited to carbon fiber, metal, or a composite, that was formed using means other than additive manufacturing.

In the case that the physical boundary portion 300 was formed using additive manufacturing, such as an extrusion process using a thermoplastic, the same 3D printer 100 may be used for both the creation of the physical boundary portion 300 and the manufacture of the infill within the physical boundary portion 300. In such a case, the CAD processing unit 230 may already be aware of the identity and relative location of the physical boundary portion 300 within the 3D printer 100 because the 3D printer itself created the physical boundary portion 300.

In contrast, in the case that the physical boundary portion 300 was created using means other than additive manufacturing or was created using additive manufacturing by another 3D printer, the CAD processing unit 230 may be in communication with an object detection system integrated with the 3D printer 100 that is capable of identifying a location of the physical boundary portion 300 within the 3D printer 100. For example, the object detection system may comprise a computer vision system that is configured to provide the CAD processing unit 230 with data necessary to match the physical boundary portion 300 with a CAD file description of the physical boundary portion 300. In some examples, the object detection system may comprise mechanical markers on the 3D printer 100 that the physical boundary portion 300 aligns with such that the CAD processing unit 230 is able to assume that the physical boundary portion 300 is in a particular location.

In addition to identifying a physical boundary portion of the target object 120 within the CAD file, the computer system 110 determines a target flow rate to infill the physical boundary portion 300 with the infill material. As used herein, the "flow rate" comprises the rate at which one or more components of the material are dispensed from the dispenser 130. The flow rate may be controllable on a per-component basis. For example, the tool path generation unit 240 comprises a flow rate processing unit 242 that determines and controls the target flow rate for dispensing infill material within the physical boundary portion 300. The flow rate processing unit 242 may be configured to manipulate the flow rate of the infill material by changing properties of the coreactive components within the infill material. It will be appreciated that the viscosity, reaction rate, and other properties of the coreactive components may be adjusted to control the flow of the coreactive components and/or the thermosetting compositions such that the deposited portions and/or the object achieves and retains a desired structural integrity following deposition. The viscosity of the coreactive components may be adjusted by the inclusion of a solvent, or the coreactive components may be substantially free of a solvent or completely free of a solvent. The viscosity of the coreactive components may be adjusted by the inclusion of a filler, or the coreactive components may be substantially free of a filler or completely free of a filler. The viscosity of the coreactive components may be adjusted by using components having lower or higher molecular weight. For example, a coreactive component may comprise a prepolymer, a monomer, or a combination of a prepolymer and a monomer. The viscosity of the coreactive components may be adjusted by changing the deposition temperature. The coreactive components may have a viscosity and temperature profile that may be adjusted for the particular deposition method used, such as mixing prior to deposition and/or ink jetting. The viscosity may be affected by the composition of the coreactive components themselves and/or may be controlled by the inclusion of rheology modifiers as described herein.

It can be desirable that the viscosity and/or the reaction rate be such that following deposition of the coreactive components the composition retains an intended shape. For example, if the viscosity is too low and/or the reaction rate is too slow a deposited composition may flow in a way that compromises the desired shape of the finished object. Similarly, if the viscosity is too high and/or the reaction rate is too fast, the desired shape may be compromised.

For example, the coreactive components that are deposited together may each have a viscosity at 25° C. and a shear rate at 0.1 s-¹ from 5,000 centipoise (cP) to 5,000,000 cP, from 50,000 cP to 4,000,000 cP, or from 200,000 cP to 2,000,000 cP. The coreactive components that are deposited together may each have a viscosity at 25° C. and a shear rate at 1,000 s-¹ from 50 centipoise (cP) to 50,000 cP, from 100 cP to 20,000 cP, or from 200 to 10,000 cP. Viscosity values can be measured using an Anton Paar MCR 301 or 302 rheometer with a gap from 1 mm to 2 mm.

Depending upon the desired properties, an infill material and a boundary material may comprise different viscosities. For example, a boundary material may comprise a higher viscosity than an infill material, such that the boundary material holds its form, while the infill material easily flows to fill a physical boundary portions defined by the boundary material. For example, an infill material may comprise a viscosity between 800 cP to 1800 cP and a boundary material may comprise a viscosity between 700 cP to 2900 cP. Additionally or alternatively, an infill material may comprise a viscosity between 300 cP to 3000 cP and a boundary material may comprise a viscosity between 500 cP to 5000 cP. Additionally or alternatively, an infill material may comprise a viscosity between 100 cP to 5000 cP and a boundary material may comprise a viscosity between 300 cP to 10000 cP.

Additionally or alternatively, the dispenser control unit 244 may adjust the characteristics of the 3D printer 100 in order to achieve a desired flow rate. For example, the dispenser control unit 244 may cause the dispenser 130 to travel faster or slower in order to achieve the desired deposition rate, viscosity, and/or reaction rate. Similarly, the dispenser control unit 244 may cause the dispenser 130 to dispense the coreactive infill material at higher or lower rates based upon a desired flow rate. As such, the flow rate processing unit 242 may adjust the properties of the coreactive components within the infill material and/or the dispenser control unit 244 may adjust the mechanical operation of the 3D printer 100 in order to achieve a desired flowrate.

In some configurations, the 3D printer 100 may be capable of utilizing multiple different types of material for infill. These different materials may comprise different combinations of coreactive components. As such, the tool path generation unit 240 may receive an indication of a single material or set of materials to be used as the infill material to create the target object 120. In some cases, the 3D printer 100 is preconfigured to use only a single material type for all additive manufacturing.

Upon receiving the indication of the material, the tool path generation unit 240 accesses from a material database 246 characteristics of the material. The characteristics of the material comprise a viscosity of the material and/or various other attributes relating to the reactivity of the material. Using the information from the material database 246 and the processes described above, the tool path generation unit 240 determines the target flow rate using characteristics of the material.

In some cases, the tool path generation unit 240 may receive the indication of the material to be used for the infill material based upon characteristics of the material that was used to create the physical boundary portion 300. In some cases, the indication of the material comprises a specific mixture coreactive components. For example, the physical boundary portion 300 may comprise a material that has specific bonding characteristics. The computer system 110 may identify those bonding characteristics and communicate an indication of a material to the tool path generation unit 240 based upon those characteristics. For instance, the physical boundary portion 300 may comprise a carbon fiber material. The computer system 100 may determine that a specific combination of coreactive components within an infill material will create the strongest bond with the carbon fiber material. The computer system 100 communicates an indication of that material to the tool path generation unit 240 for generation of an appropriate tool path. Alternatively, the computer system 100 may determine that a particular combination of coreactive components within an infill material will be corrosive to the carbon fiber material, and thus avoid that particular combination.

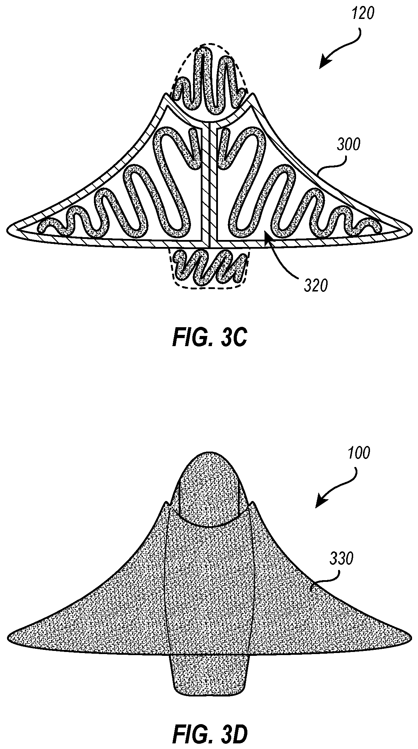

Once the tool path generation unit 240 has determined the target flow rate, the tool path generation unit 240 generates a first tool path to flow infill material into the physical boundary portion. As used herein, a "tool path" refers to the path and speed of the dispenser 130 as it manufactures the target object 120. Figure 3C illustrates a first tool path 320 within the physical boundary portion 300 of the example target object 120. The tool path generation unit 240 generates the first tool path 320 such that the infill material is dispensed from the dispenser 130 at a rate and along a path that will fill the area within the physical boundary portion 300.

In some circumstances, the first tool path 320 may require the dispenser 130 to layer coreactive infill material in layers on top of itself. The flow rate processing unit 242 and dispenser control unit 244 calculate a target flowrate to ensure that the coreactive material chemically bonds between the different layers. Such calculations may account for the reactive time of the coreactive material such that the layers are placed on top of each other before lower layers have time to fully cure. As such, the generation of the first tool path may be based, at least in part, upon the target flow rate. As explained above, such information relating to the amount of time that different coreactive components remain reactive is provided by the material database 246.

Additionally, in some configurations, the coreactive components may utilize an external stimulus, such as UV light during the reaction process. In such cases, the 3D printer 100 may comprise a UV light source that is controllable by the computer system 110. The 3D printer 100 may be configurable to dispense the coreactive infill material and cure the material with a UV light source during and/or after the first tool path 320 has been implemented. Various other stimuli may be similarly implemented by the computer system 110 such that the stimuli is applied to the coreactive infill material during and/or after the dispensing of the coreactive infill material within the physical boundary portion 300 using the first tool path 320.

Additionally, the dispenser control unit 244 may also be configured to allow the dispenser 130 to coast during the first tool path 320. As used herein, "coast" refers to the ability of the dispenser 130 to continue along a tool path (e.g., the first tool path 320) while continuing to dispense infill material despite the 3D printer 100 no longer actively causing infill material to flow into the dispenser 130. The ability to coast is caused, at least in part, by infill material that is within the dispenser 130 and portion of the 3D printer between the dispenser 130 and a holding container for the infill material. As such, when implementing the first tool path 320, the dispenser may dispense unwanted, excess infill material if it is not allowed to coast and drain the infill material within the system during the first tool path. Accordingly, the generation of the first tool path 320 may comprise a portion where the dispenser is allowed to coast and continue to extrude remaining material that is within the dispenser.

Once the first tool path 320 has been generated, the computer system 110 sends instructions to a dispenser 130 that cause the dispenser 130 to implement the first tool path 320 while flowing the infill material into the physical boundary portion 300. Figure 3D illustrates the completed target object 120 with the infill material fully in place. The use of coreactive components to create the infill material can result in several desirable properties. For example, the infill material may be covalently bonded, instead of the physical adhesion bonds that are often found in thermoplastic printing. Additionally, the results bonds within the infill material may be water tight and/or air tight.

In addition to or alternative to the above described first tool path 320, the tool path generation unit 240 may also generate a second tool path to additively manufacture the physical boundary portion 300. The physical boundary portion 300 may be constructed through an additive manufacturing process using coreactive components, thermoplastic materials, and/or any other additive manufacturing. Using the methods and systems described above, once the tool path generation unit 240 generates the second tool path, the tool path generation unit 240 sends instructions to the computer system 110 in communication with the dispenser 130 that cause the dispenser 130 to implement the second tool path while flowing boundary material to form the physical boundary portion 300. One will appreciate that in some cases the second tool path may be implemented before the first tool path 320, such that the physical boundary portion 300 is created before the first tool path 320 is implemented to dispense infill material within the physical boundary portion 300.

Additionally, in some cases, the second tool path and the first tool path may be implemented simultaneously, such that while a first dispenser is creating the physical boundary portion 300 a second dispenser is dispensing the infill material. In such a case, a target flow rate may be determined based upon the progress of the additive manufacture of the physical boundary portion. The target flow rate may be set at a particular rate in order to avoid the infill material from flowing outside of the area that the under-construction physical boundary portion currently encompasses.

In some cases, the infill material and the boundary material comprise the same composition. For example, the physical boundary portion 300 may be created from coreactive components using an initial tool path. Another tool path may then be used to dispense the same coreactive components as infill into the physical boundary portion 300. As such, the physical boundary portion 300 may also form coreactive bonds with the infill material.

Additionally or alternatively, in some cases, the infill material comprises a coreactive material and the boundary material comprise a thermoplastic. For example, the physical boundary portion 300 may be created from thermoplastic using an initial tool path. Another tool path may then be used to dispense the coreactive components as infill into the physical boundary portion 300. As such, the physical boundary portion 300 may provide specific physical characteristics that are not provided by the coreactive components in the infill material.

Further, additionally or alternatively, in some cases, the infill material comprises a thermoplastic and the boundary material comprises a coreactive material. For example, the physical boundary portion 300 may be created from a coreactive material using an initial tool path. Another tool path may then be used to extrude thermoplastic as infill into the physical boundary portion 300. As such, the physical boundary portion 300 may provide specific physical characteristics that are not provided by the thermoplastic in the infill material.

Additionally or alternatively using each of the method and system described herein, the tool path generation unit 240 may generate a second tool path to additively manufacture the physical boundary portion 300. The physical boundary portion 300 may be constructed through an additive manufacturing process using coreactive components, thermoplastic materials, and/or any other additive manufacturing. Using the methods and systems described above, once the tool path generation unit 240 generates the second tool path, the tool path generation unit 240 sends instructions to the computer system 110 in communication with another dispenser that causes the other dispenser to implement the second tool path while flowing boundary material to form the physical boundary portion 300.

As such, the 3D printer 100 may comprise multiple separate dispensers. The dispensers may be used for different types of materials, such as a dispenser for coreactive materials and a dispenser for thermoplastic. The dispensers may be used for different coreactive components that are dispensed to create the target object 120. For example, the dispensers may dispense different coreactive components at particular flow rates in order to produce a final coreactive material that comprises a target volume mix ratio. One will appreciate, though, that similar control of the coreactive components in a material to achieve a target volume mix ratio may be practiced with a single dispenser 130. For instance, the 3D printer 100 may comprise a mixing apparatus that mixes coreactive components from different containers at a desired rate.

As stated above, the infill material may comprise a mixture of two different materials, such as different reactive components. Additionally, the two different materials within the infill material may be dispensed as a gradient. For example, two particular coreactive components within the infill material may provide different properties based upon the volume mix ratio of the two coreactive components. As an example, the volume mix ratio of the two particular coreactive components may impact the flexibility of the resulting infill material. As such, the tool path generation unit 240 calculates a volume mix ratio of components within the infill material that changes over the tool path.

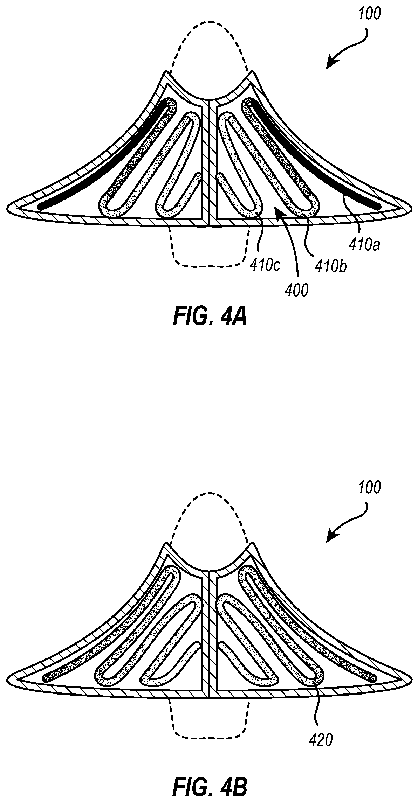

For example, Figure 4A illustrates a tool path 400 with a variable volume mix ratio within the physical boundary portion of the example target object 120. In the shown example, the tool path 400 comprises three distinct volume mix ratios 410a, 410b, 410c. Such a configuration may be useful when the volume mix ratio of two coreactive components impacts the rigidity of the infill material. In the example case of a drone body, it may be desirable for the wing tips and edges to comprise a more flexible material while the wing portions closer to the center of the drone body comprise greater rigidity.

The computer system 110 may be able to identify this particular desired mix volume ratio when the CAD processing unit 230 processes the CAD file that describes the drone body. Additionally or alternatively, the variable volume mix ratio may be otherwise provided by a user. In any case, the tool path generation unit 240 identifies the variable volume mix ratio and determines what adjustments to make to the volume mix ratio along the tool path 400. The flow rate processing unit 242, the dispenser control unit 244, and the material database 246 operate in conjunction to control the mixture of the desired components within the coreactive infill material.

Additionally, the flow rate processing unit 242 and the dispenser control unit 244 may operate in conjunction to optimize the tool path such that the volume mix ratio of the mixture is changed as few times as possible during the manufacture of the target object. For instance, the flow rate processing unit 242 may determine that a first component and a second component should maintain a first volume mix ratio 410a over a first portion of the tool path. The flow rate processing unit 242 may then determine that the first component and the second component should maintain a second volume mix ratio 410b over a second portion of the tool path. Additionally, the flow rate processing unit 242 may then determine that the first component and the second component should maintain a third volume mix ratio 410c over a third portion of the tool path. The flow rate processing unit 242 may generate the necessary instructions for a mixing apparatus within the 3D printer 100 to create the desired volume mix ratios 410a, 410b, 410c at the desired time.

Additionally, the dispenser control unit 244 may adjust the characteristics of the 3D printer 100 in order to achieve a desired flow rate. For instance, as the volume mix ratio is changed during the tool path 400, the changing characteristics of the material may make it necessary to adjust the dispenser speed in order the maintain a desired viscosity of the coreactive materials. Accordingly, the tool path generation unit 240 is capable of generating a tool path for the dispensing of a gradient of infill material.

Figure 4B illustrates another tool path 420 within a variable volume mix ratio within the physical boundary portion of the example target object 120. In this depiction, the tool path 420 comprises a constant gradient in the volume mix ratio along the tool path 420. Such a gradient may be achieved using the methods and system described above. The resulting infill material may comprise a similar gradient in the characteristics of the infill material.

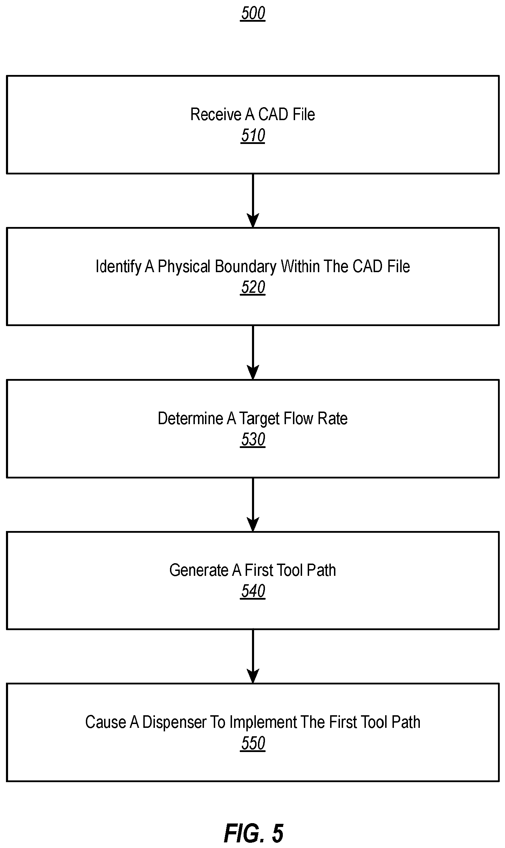

Figure 5 shows a flowchart of steps in a method 500 for rapid object production using additive infill design. The depicted method 500 includes an act 510 of receiving a CAD file. Act 510 comprises receiving, at one or more processors, a computer-aided design (CAD) file that describes physical dimensions of a target object. For example, as depicted and described with respect to Figure 2, the CAD processing unit 230 receives a CAD file of a target object 120.

Method 500 also includes an act 520 of identifying a physical boundary within the CAD file. Act 520 comprises identifying, with the one or more processors, a physical boundary portion of the target object within the CAD file, wherein the physical boundary portion comprises a portion of the target object that encloses infill material. For example, as depicted and described with respect to Figures 2, 3B, and 3C, the CAD processing unit 230 is configured to identify a physical boundary portion 300 of the target object 120. In some cases, the physical boundary portion 300 is manufactured, at least in part, by the 3D printer 100, while in other cases, the physical boundary portion 300 is manufactured and then placed within the 3D printer 100.

Additionally, method 500 includes an act 530 of determining a target flow rate. Act 530 comprises determining, with one or more processors, a target flow rate to infill the physical boundary portion with the infill material. The physical boundary portion comprises a portion of the target object that encloses infill material. For example, as depicted and described with respect to Figures 2, 3B, and 3C, the tool path generation unit 240 comprises a flow rate processing unit 242, a dispenser control unit 244, and a material database 246 that may be used in conjunction to determine a flow rate that will allow the coreactive components within the infill material to react as desired and also allow the viscosity of the infill material to properly fill the desired space without flowing outside the desired space.

Further, method 500 includes an act 540 of generating a first tool path. Act 540 comprises generating, with one or more processors, a first tool path to flow infill material into the physical boundary portion. For example, as depicted and described with respect to Figures 2, 3B, and 3C, the tool path generation unit 240 generates a first tool path 320 that is configured to dispense the infill material within the physical boundary portion 300.

Further still, method 500 includes an act 550 of causing a dispenser to implement the first tool path. Act 550 comprises sending instructions to a computer system in communication with a dispenser that cause the dispenser to implement the first tool path while flowing the infill material into the physical boundary portion. For example, as depicted and described with respect to Figures 2, 3B, and 3C, the computer system 110 communicates instructions to the 3D printer 100, which in turn actuates the dispenser to move along the first tool path and dispense infill materials at the target flow rate.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

The present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud-computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud-computing model can be composed of various characteristics, such as on-demand self-service, broad network access, resource pooling, rapid elasticity, measured service, and so forth. A cloud-computing model may also come in the form of various service models such as, for example, Software as a Service ("SaaS"), Platform as a Service ("PaaS"), and Infrastructure as a Service {"laaS"). The cloud-computing model may also be deployed using different deployment models such as private cloud, community cloud, public cloud, hybrid cloud, and so forth.

Some embodiments, such as a cloud-computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

## Claims

1. A computer system (110) for part production using additive infill
design, comprising: one or more processors (210); and
one or more computer-readable media having stored thereon executable instructions that when executed by the one or more processors (210) configure the computer system (110) to perform at least the following:
receive a computer-aided design (CAD) file that describes physical dimensions of a target object (120);
identify a physical boundary portion (300) of the target object (120) within the CAD file, wherein the physical boundary portion (300) comprises a portion of the target object (120) that encloses infill material;
determine a target flow rate to infill the physical boundary portion (300) with the infill material;
generate a first tool path (320) to flow infill material into the physical boundary portion (300), wherein the infill material comprises a coreactive material; and
send instructions to a dispenser (130) that cause the dispenser (130) to implement the first tool path (320) while flowing the infill material into the physical boundary portion (300), wherein the infill material comprises a mixture of two different materials,
**characterized in that** a volume mix ratio of the mixture of the two different materials is varied over the first tool path (320).

2. The computer system (110) of claim 1, wherein the generation of the first tool path (320) is based, at least in part, upon the target flow rate and/or wherein the generation of the first tool path (320) comprises a portion where the dispenser (130) is allowed to coast and continue to extrude remaining material that is within the dispenser (130).

3. The computer system (110) of any one of claims 1 or 2, wherein the executable instructions include instructions that are executable to configure the computer system (110) to:
generate a second tool path to additively manufacture the physical
boundary portion (300);
and
send instructions to the dispenser (130) that cause the dispenser (130) to implement the second tool path while flowing boundary material to form the physical boundary portion (300).

4. The computer system (110) of any one of claims 1 to 3, wherein the executable instructions include instructions that are executable to configure the computer system (110) to:
generate a second tool path to additively manufacture the physical
boundary portion (300);
and
send instructions to the computer system (110) in communication with another dispenser that cause the other dispenser to implement the second tool path while flowing boundary material to form the physical boundary portion (300).

5. The computer system (110) of any one of claims 1 to 4, wherein the executable instructions include instructions that are executable to configure the computer system (110) to:
receive an indication of a material to be used as the infill material to create the target object (120); access, from a material database, characteristics of
the material, wherein characteristics of
the material comprise a viscosity of the material; and
determine the target flow rate using characteristics of the material.

6. The computer system (110) of any one of claims 1 to 5, further comprising a three-dimensional printer (100), in communication with the computer system, the three- dimensional printer (100) comprising the dispenser (130).

7. A method for part production using additive infill design, comprising:
receiving, at one or more processors (210), a computer-aided design (CAD) file that describes physical dimensions of a target object (120);
identifying, with the one or more processors (210), a physical boundary portion (300) of the target object (120) within the CAD file, wherein the physical boundary portion (300) comprises a portion of the target object (120) that encloses infill material;
determining, with one or more processors (210), a target flow rate to infill the physical boundary portion (300) with the infill material;
generating, with one or more processors (210), a first tool path (320) to flow infill material into the physical boundary portion (300), wherein the infill material comprises a coreactive material; and
sending instructions to a dispenser (130) that cause the dispenser (130) to implement the first tool path (320) while flowing the infill material into the physical boundary portion (300),
and wherein the infill material comprises a mixture of two different materials,
**characterized in that** a volume mix ratio of the mixture of the two different materials is varied over the first tool path (320).

8. The method of claim 7, wherein the generation of the first tool path (320) is based, at least in part, upon the target flow rate.

9. The method of any one of claims 7 or 8, wherein the generation of the first tool path (320) comprises a portion where the dispenser (130) is allowed to coast and continue to extrude remaining material that is within dispenser (130).

10. The method of any one of claims 7 to 9, further comprising:
generating a second tool path to additively manufacture the physical boundary portion (300); and
sending instructions to the dispenser (130) that cause the dispenser (130) to implement the second tool path while flowing boundary material to form the physical boundary portion (300).

11. The method of any one of claims 7 to 10, wherein the boundary material comprises a thermoplastic.

12. The method of any one of claims 7 to 11, further comprising:
generating a second tool path to additively manufacture the physical boundary portion (300); and
sending instructions to another dispenser (130) that cause the other dispenser to implement the second tool path while flowing boundary material to form the physical boundary portion (300).

13. The method of any one of claims 7 to 12, further comprising:
receiving an indication of a material to be used as the infill material to create the target object (120);
accessing, from a material database, characteristics of the material,
wherein characteristics of the material comprise a viscosity of the material; and
determining the target flow rate using characteristics of the material.

## Patentansprüche

1. Ein Computersystem (110) zur Teilefertigung unter Verwendung eines additiven Füllverfahrens, enthaltend: einen oder mehrere Prozessor(en) (210); und
ein oder mehrere computerlesbare Medien, auf denen ausführbare Befehle gespeichert sind, die, wenn sie von dem einen oder den mehreren Prozessor(en) (210) ausgeführt werden, das Computersystem (110) so konfigurieren, dass es zumindest Folgendes ausführt:
Empfangen einer Computer-Aided Design (CAD) Datei, die die physikalischen Abmessungen eines Zielobjekts (120) beschreibt;
Identifizieren eines physikalischen Begrenzungsabschnitts (300) des Zielobjekts (120) innerhalb der CAD-Datei, wobei der physikalische Begrenzungsabschnitt (300) einen Abschnitt des Zielobjekts (120) umfasst, der Füllmaterial umschließt;
Ermitteln einer Zielflussrate, um den physikalischen Begrenzungsabschnitt (300) mit dem Füllmaterial zu füllen;
Erzeugen eines ersten Werkzeugpfads (320), um Füllmaterial in den physikalischen Begrenzungsabschnitt (300) fließen zu lassen, wobei das Füllmaterial ein co-reaktives Material enthält; und
Senden von Befehlen an eine Dosiervorrichtung (130), die bewirken, dass die Dosiervorrichtung (130) den ersten Werkzeugpfad (320) ausführt, während das Füllmaterial in den physikalischen Begrenzungsabschnitt (300) eingeleitet wird, wobei das Füllmaterial eine Mischung aus zwei verschiedenen Materialien enthält, **dadurch gekennzeichnet, dass** ein Volumenmischungsverhältnis der Mischung aus den zwei verschiedenen Materialien über den ersten Werkzeugpfad (320) variiert wird.

2. Das Computersystem (110) nach Anspruch 1, wobei die Erzeugung des ersten Werkzeugpfads (320) zumindest teilweise auf der Zielflussrate basiert und/oder wobei die Erzeugung des ersten Werkzeugpfads (320) einen Abschnitt umfasst, in dem die Dosiervorrichtung (130) weiterlaufen darf und verbleibendes Material, das sich in der Dosiervorrichtung (130) befindet, weiter extrudiert.

3. Das Computersystem (110) nach irgendeinem der Ansprüche 1 oder 2, wobei die ausführbaren Befehle Befehle umfassen, die ausführbar sind, um das Computersystem (110) wie folgt zu konfigurieren:
Erzeugen eines zweiten Werkzeugpfads zur additiven Fertigung des physikalischen Begrenzungsabschnitts (300); und
Senden von Befehlen an die Dosiervorrichtung (130), die bewirken, dass die Dosiervorrichtung (130) den zweiten Werkzeugpfad ausführt, während Begrenzungsmaterial fließt, um den physikalischen Begrenzungsabschnitt (300) zu bilden.

4. Das Computersystem (110) nach irgendeinem der Ansprüche 1 bis 3, wobei die ausführbaren Befehle Befehle umfassen, die ausführbar sind, um das Computersystem (110) wie folgt zu konfigurieren:
Erzeugen eines zweiten Werkzeugpfads zur additiven Fertigung des physikalischen Begrenzungsabschnitts (300); und
Senden von Befehlen an das Computersystem (110), das mit einer anderen Dosiervorrichtung in Verbindung steht, wodurch die andere Dosiervorrichtung veranlasst wird, den zweiten Werkzeugpfad auszuführen, während Begrenzungsmaterial fließt, um den physikalischen Begrenzungsabschnitt (300) zu bilden.

5. Das Computersystem (110) nach irgendeinem der Ansprüche 1 bis 4, wobei die ausführbaren Befehle Befehle umfassen, die ausführbar sind, um das Computersystem (110) wie folgt zu konfigurieren:
Empfangen einer Angabe eines Materials, das als Füllmaterial zur Erzeugung des Zielobjekts (120) verwendet werden soll; Zugreifen auf Eigenschaften des Materials aus einer Materialdatenbank, wobei die Eigenschaften des Materials eine Viskosität des Materials umfassen; und
Bestimmen der Zielflussrate unter Verwendung der Eigenschaften des Materials.

6. Das Computersystem (110) nach irgendeinem der Ansprüche 1 bis 5, das ferner einen dreidimensionalen Drucker (100) umfasst, der mit dem Computersystem in Verbindung steht, wobei der dreidimensionale Drucker (100) die Dosiervorrichtung (130) umfasst.

7. Ein Verfahren zur Teilefertigung unter Verwendung eines additiven Füllverfahrens, umfassend:
Empfangen, an einem oder mehreren Prozessor(en) (210), einer Computer-Aided Design (CAD) Datei, die die physikalischen Abmessungen eines Zielobjekts (120) beschreibt;
Identifizieren, mit dem einen oder den mehreren Prozessor(en) (210), eines physikalischen Begrenzungsabschnitts (300) des Zielobjekts (120) innerhalb der CAD-Datei, wobei der physikalische Begrenzungsabschnitt (300) einen Abschnitt des Zielobjekts (120) umfasst, der Füllmaterial umschließt;
Ermitteln, mit dem einen oder den mehreren Prozessor(en) (210), einer Zielflussrate, um den physikalischen Begrenzungsabschnitt (300) mit dem Füllmaterial zu füllen;
Erzeugen, mit dem einen oder den mehreren Prozessor(en) (210), eines ersten Werkzeugpfads (320), um Füllmaterial in den physikalischen Begrenzungsabschnitt (300) fließen zu lassen, wobei das Füllmaterial ein co-reaktives Material enthält; und
Senden von Befehlen an eine Dosiervorrichtung (130), die bewirken, dass die Dosiervorrichtung (130) den ersten Werkzeugpfad (320) ausführt, während das Füllmaterial in den physikalischen Begrenzungsabschnitt (300) eingeleitet wird, und wobei das Füllmaterial eine Mischung aus zwei verschiedenen Materialien enthält, **dadurch gekennzeichnet, dass** ein Volumenmischungsverhältnis der Mischung aus den zwei verschiedenen Materialien über den ersten Werkzeugpfad (320) variiert wird.

8. Das Verfahren nach Anspruch 7, wobei die Erzeugung des ersten Werkzeugpfads (320) zumindest teilweise auf der Zielflussrate basiert.

9. Das Verfahren nach irgendeinem der Ansprüche 7 oder 8, wobei die Erzeugung des ersten Werkzeugpfads (320) einen Abschnitt umfasst, in dem die Dosiervorrichtung (130) weiterlaufen darf und verbleibendes Material, das sich in der Dosiervorrichtung (130) befindet, weiter extrudiert.

10. Das Verfahren nach irgendeinem der Ansprüche 7 bis 9, das ferner umfasst:
Erzeugen eines zweiten Werkzeugpfads zur additiven Fertigung des physikalischen Begrenzungsabschnitts (300); und
Senden von Befehlen an die Dosiervorrichtung (130), die bewirken, dass die Dosiervorrichtung (130) den zweiten Werkzeugweg ausführt, während Begrenzungsmaterial fließt, um den physikalischen Begrenzungsabschnitt (300) zu bilden.

11. Das Verfahren nach irgendeinem der Ansprüche 7 bis 10, wobei das Begrenzungsmaterial einen Thermoplast umfasst.

12. Das Verfahren nach irgendeinem einem der Ansprüche 7 bis 11, das ferner umfasst:
Erzeugen eines zweiten Werkzeugpfads zur additiven Fertigung des physikalischen Begrenzungsabschnitts (300); und
Senden von Befehlen an eine weitere Dosiervorrichtung (130), die bewirken, dass die weitere Dosiervorrichtung den zweiten Werkzeugpfad ausführt, während Begrenzungsmaterial fließt, um den physikalischen Begrenzungsabschnitt (300) zu bilden.

13. Das Verfahren nach irgendeinem der Ansprüche 7 bis 12, das ferner umfasst:
Empfangen einer Angabe eines Materials, das als Füllmaterial zur Erzeugung des Zielobjekts (120) verwendet werden soll;
Zugreifen von Eigenschaften des Materials aus einer Materialdatenbank,
wobei die Eigenschaften des Materials eine Viskosität des Materials umfassen; und
Bestimmen der Zielflussrate unter Verwendung der Eigenschaften des Materials.

## Revendications

1. Système informatique (110) pour la production de pièces à l'aide d'une conception additive avec remplissage, comprenant :
un ou plusieurs processeurs (210) ; et
un ou plusieurs supports lisibles par ordinateur sur lesquels sont stockées des instructions exécutables qui, lorsqu'elles sont exécutées par les un ou plusieurs processeurs (210), configurent le système informatique (110) pour effectuer au moins les opérations suivantes consistant à :
recevoir un fichier de conception assistée par ordinateur (CAO) qui décrit des dimensions physiques d'un objet cible (120) ;
identifier une portion formant limite physique (300) de l'objet cible (120) à l'intérieur du fichier de CAO, la portion formant limite physique (300) comprenant une portion de l'objet cible (120) qui entoure du matériau de remplissage ;
déterminer un débit cible pour remplir la portion formant limite physique (300) avec le matériau de remplissage ;
générer une première trajectoire d'outil (320) pour faire s'écouler du matériau de remplissage dans la portion formant limite physique (300), le matériau de remplissage comprenant un matériau coréactif ; et
envoyer, à un distributeur (130), des instructions qui amènent le distributeur (130) à mettre en œuvre la première trajectoire d'outil (320) tout en faisant s'écouler le matériau de remplissage dans la portion formant limite physique (300),
dans lequel le matériau de remplissage comprend un mélange de deux matériaux différents,
**caractérisé en ce qu'**un rapport de mélange volumique du mélange des deux matériaux différents est amené à varier sur la première trajectoire d'outil (320).

2. Système informatique (110) selon la revendication 1, dans lequel la génération de la première trajectoire d'outil (320) est basée, au moins en partie, sur le débit cible et/ou dans lequel la génération de la première trajectoire d'outil (320) comprend une portion où on laisse le distributeur (130) avancer sans apport et continuer d'extruder du matériau restant qui se trouve à l'intérieur du distributeur (130).

3. Système informatique (110) selon n'importe laquelle des revendications 1 et 2, dans lequel les instructions exécutables incluent des instructions qui sont exécutables pour configurer le système informatique (110) pour :
générer une deuxième trajectoire d'outil pour fabriquer de manière additive la portion formant limite physique (300) ; et
envoyer, au distributeur (130), des instructions qui amènent le distributeur (130) à mettre en œuvre la deuxième trajectoire d'outil tout en faisant s'écouler du matériau de limite pour former la portion formant limite physique (300).

4. Système informatique (110) selon n'importe laquelle des revendications 1 à 3, dans lequel les instructions exécutables incluent des instructions qui sont exécutables pour configurer le système informatique (110) pour :
générer une deuxième trajectoire d'outil pour fabriquer de manière additive la portion formant limite physique (300) ; et
envoyer, au système informatique (110) en communication avec un autre distributeur, des instructions qui amènent l'autre distributeur à mettre en œuvre la deuxième trajectoire d'outil tout en faisant s'écouler du matériau de limite pour former la portion formant limite physique (300).

5. Système informatique (110) selon n'importe laquelle des revendications 1 à 4, dans lequel les instructions exécutables incluent des instructions qui sont exécutables pour configurer le système informatique (110) pour :
recevoir une indication d'un matériau à utiliser comme matériau de remplissage pour créer l'objet cible (120) ;
accéder, dans une base de données de matériau, à des caractéristiques du matériau, les caractéristiques du matériau comprenant une viscosité du matériau ; et
déterminer le débit cible à l'aide des caractéristiques du matériau.

6. Système informatique (110) selon n'importe laquelle des revendications 1 à 5, comprenant en outre une imprimante tridimensionnelle (100), en communication avec le système informatique, l'imprimante tridimensionnelle (100) comprenant le distributeur (130).

7. Procédé pour la production de pièces à l'aide d'une conception additive avec remplissage, comprenant :
la réception, au niveau d'un ou de plusieurs processeurs (210), d'un fichier de conception assistée par ordinateur (CAO) qui décrit des dimensions physiques d'un objet cible (120) ;
l'identification, avec les un ou plusieurs processeurs (210), d'une portion formant limite physique (300) de l'objet cible (120) à l'intérieur du fichier de CAO, la portion formant limite physique (300) comprenant une portion de l'objet cible (120) qui entoure du matériau de remplissage ;
la détermination, avec un ou plusieurs processeurs (210), d'un débit cible pour remplir la portion formant limite physique (300) avec le matériau de remplissage ;
la génération, avec un ou plusieurs processeurs (210), d'une première trajectoire d'outil (320) pour faire s'écouler du matériau de remplissage dans la portion formant limite physique (300), le matériau de remplissage comprenant un matériau coréactif ; et
l'envoi, à un distributeur (130), d'instructions qui amènent le distributeur (130) à mettre en œuvre la première trajectoire d'outil (320) tout en faisant s'écouler le matériau de remplissage dans la portion formant limite physique (300),
et dans lequel le matériau de remplissage comprend un mélange de deux matériaux différents,
**caractérisé en ce qu'**un rapport de mélange volumique du mélange des deux matériaux différents est amené à varier sur la première trajectoire d'outil (320).

8. Procédé selon la revendication 7, dans lequel la génération de la première trajectoire d'outil (320) est basée, au moins en partie, sur le débit cible.

9. Procédé selon n'importe laquelle des revendications 7 et 8, dans lequel la génération de la première trajectoire d'outil (320) comprend une portion où on laisse le distributeur (130) avancer sans apport et continuer d'extruder du matériau restant qui se trouve à l'intérieur du distributeur (130).

10. Procédé selon n'importe laquelle des revendications 7 à 9, comprenant en outre :
la génération d'une deuxième trajectoire d'outil pour fabriquer de manière additive la portion formant limite physique (300) ; et
l'envoi, au distributeur (130), d'instructions qui amènent le distributeur (130) à mettre en œuvre la deuxième trajectoire d'outil tout en faisant s'écouler du matériau de limite pour former la portion formant limite physique (300).

11. Procédé selon n'importe laquelle des revendications 7 à 10, dans lequel le matériau de limite comprend un thermoplastique.

12. Procédé selon n'importe laquelle des revendications 7 à 11, comprenant en outre :
la génération d'une deuxième trajectoire d'outil pour fabriquer de manière additive la portion formant limite physique (300) ; et
l'envoi, à un autre distributeur (130), d'instructions qui amènent l'autre distributeur à mettre en œuvre la deuxième trajectoire d'outil tout en faisant s'écouler du matériau de limite pour former la portion formant limite physique (300).

13. Procédé selon n'importe laquelle des revendications 7 à 12, comprenant en outre :
la réception d'une indication d'un matériau à utiliser comme matériau de remplissage pour créer l'objet cible (120) ;
l'accès, dans une base de données, à des caractéristiques du matériau, les caractéristiques du matériau comprenant une viscosité du matériau ; et
la détermination du débit cible à l'aide des caractéristiques du matériau.
